# EUROPÄISCHE PATENTSCHRIFT

(11) **EP 2 779 323 B1**
(45) Veröffentlichungstag und Bekanntmachung des Hinweises auf die Patenterteilung: **07.06.2017**
(21) Anmeldenummer: 14000711.3
(22) Anmeldetag: 27.02.2014
(51) Int. Cl.: H01R 13/74, F16L 5/00, H02G 3/22, H01R 13/52, H02G 3/06

(54) **Befestigungsvorrichtung für Kabelanschlüsse**
Fastening device for cable connections
Dispositif de fixation pour raccords de câbles

(30) Priorität: 15.03.2013 DE 202013002485 U
(43) Veröffentlichungstag der Anmeldung: 17.09.2014
(73) Patentinhaber: Gerich, Adam, 74405 Gaildorf (DE)
(72) Erfinder: Gerich, Adam, 74405 Gaildorf (DE)
(74) Vertreter: Clemens, Gerhard

(56) Entgegenhaltungen:
- WO-A1-2009/097842
- DE-U1-202009 010 452

## Beschreibung

### TECHNISCHES GEBIET

Die vorliegende Erfindung betrifft eine Befestigungsvorrichtung für Bauteile, insbesondere Kabelanschlüsse oder dergleichen, in einer Durchgangsausnehmung einer Wandung, insbesondere eines Schaltschranks, mit einer Außenseite und einer Innenseite mit einer Grundkörpereinheit mit einer durchgehenden Ausnehmung, wobei die Grundkörpereinheit bis zu einem stirnseitigen Anschlag an der Außenseite der Wandung anlegbar ist, und einer innenseitig anordenbaren mit der Grundkörpereinheit verbindbaren Befestigungseinheit, mittels deren die Befestigungsvorrichtung an der Wandung befestigbar ist, die Befestigungseinheit als Befestigungsmutter ausgebildet ist und die Befestigungseinheit eine durchgehende Ausnehmung aufweist, einen Kopfbereich aufweist, einen Schaftbereich mit Gewinde, das in das Gewinde der Grundkörpereinheit schraubbar ist, aufweist, eine Formschlusskontur, die an der Innenwandung der durchgehenden Ausnehmung zumindest bereichsweise vorhanden ist und an der eine Gegenformschlusskontur eines durch die Ausnehmung der Grundkörpereinheit einführbares Drehwerkzeug anschließbar ist, aufweist, der Kopfbereich zumindest zwei erste Bereiche und zwischen den ersten Bereichen angeordnete zweite Bereiche aufweist, wobei der Abstand der äußeren Randkonturen der ersten Bereiche größer ist als die Querschnittsabmessung der Durchgangsausnehmung und der Abstand der äußeren Randkontur der zweiten Bereiche kleiner ist als die Querschnittsabmessung der Durchgangsöffnung, so dass der Kopfbereich der Befestigungsmutter durch Neigung derselben in die Durchgangsausnehmung einfädelbar, hindurch führbar und hintergreifbar ist, das Gewinde des Schaftbereiches als Außengewinde ausgebildet ist und das Gewinde der Grundkörpereinheit als Innengewinde ausgebildet ist.

Insbesondere bei Schaltschränken dienen derartige Befestigungsvorrichtungen dazu, die Befestigung von Kabelanschlüssen zu ermöglichen. Die Befestigungsvorrichtungen werden direkt vor Ort am Schaltschrank montiert.

### STAND DER TECHNIK

Aus der DE 43 25 420 C2 ist eine Befestigungseinrichtung bekannt. Dort ist eine Kabeldurchgangsvorrichtung zum Durchführen eines ummantelten Kabels durch eine Wandperforation beschrieben mit einer Steckmuffe mit zwei federnden Rastfingern. Im Innenraum der Steckmuffe ist eine axial verstellbare Klemmhülse vorhanden. Weiterhin ist eine Klemmmutter vorhanden, die die Steckmuffe umgibt und mit der Klemmhülse in Schraubverbindung steht. Ein axiales Verstellen der Klemmhülse ist möglich, dadurch, dass der Klemmkäfig durch Kontakt mit der Steckmuffe verformt und die Rastfinger aufgespreizt werden.

In der DE 27 12 399 A1, DE 33 20 164 C2 und US 4,652,169 ist beschrieben, zur Befestigung einer Grundkörpereinheit an einer Wand Biegeeinheiten vorzusehen, die bei in die Ausnehmung in die Wandung eingesetzter Vorrichtung mittels einer Verformungseinrichtung nach außen verbiegbar und an der Wandaußenseite festlegbar sind.

Eine weitere Befestigungsvorrichtung ist aus der DE 195 15 860 C2 bekannt. Zur Einbringung der Verriegelungseinheit in den Schlitz zwischen Biegeeinheit und Vorsprungeinheit um ein Verbiegen der Verbiegeeinheit und damit eine Fixierung des Grundkörper an der Wandung zu erzielen, wird eine spezielle Zangenkonstruktion von außen her eingeführt, die in der EP 0 976 958 B1 beschrieben ist. Eine derartige Befestigungsvorrichtung hat sich in der Praxis bewährt. Sie ermöglicht eine einfache und schnelle Montage und gewährleistet eine dauerhaft zuverlässige Befestigungsfunktion. Allerdings stößt eine derartige Befestigungsvorrichtung an ihre Grenzen, sobald metallische Werkstoffe für den Grundkörper mit Biege- und Vorsprungeinheit eingesetzt werden. In diesem Falle müssen zum Verbiegen der Biegeeinheit sehr hohe Kräfte aufgebracht werden, was zur Folge hat, dass die Zange zum Verschieben der Verriegelungseinheit konstruktiv besonders aufwendig gestaltet werden muss und daher sehr teuer wird.

In der deutschen Gebrauchsmusterschrift DE 20 2009 010 452 U1 ist eine gattungsgemäße Befestigungsvorrichtung beschrieben. Dabei wird eine Vorsprungeinheit eingesetzt, die bei eingesetzter Vorrichtung über die Innenseite hinausragt. Außenumfangsseitig ist um die Vorsprungeinheit eine Biegeeinheit beabstandet angeordnet, so dass zwischen Biegeeinheit und Vorsprungeinheit ein Schlitz vorhanden ist. In diesen Schlitz wird eine Verriegelungseinheit eingedreht, so dass sich dadurch die Biegeeinheit plastisch verbiegt und somit ein sicherer Anschluss gewährleistet ist.

Aus der WO 2009/097842 A1 ist eine Steckvorrichtung zur Montage in einer Durchtrittsöffnung eines flächigen Bauteils, insbesondere einer Schaltschrankwand, mit einem Kopfteil zum Durchtritt durch die Durchtrittsöffnung, mit einem Gewindeteil zum Verbleib vor der Durchtrittsöffnung und mit einer auf das Gewindeteil aufschraubbaren Befestigungsmutter zur Festlegung der Steckvorrichtung im Randbereich der Durchtrittsöffnung offenbart. Das Kopfteil weist zumindest zwei erste Bereiche und zwischen den ersten Bereichen angeordnete zweite Bereiche auf, wobei der Abstand der äußeren Wandkonturen der ersten Bereiche größer ist als die Querschnittsabmessung der Durchgangsausnehmung und der Abstand der äußeren Randkontur der zweiten Bereiche kleiner ist als die Querschnittsabmessung der Durchgangsausnehmung, so dass das Kopfteil, das einstückig mit dem Gewindeteil verbunden ist, durch Neigung des Gewindeteils in die Durchgangsausnehmung einfädelbar, hindurch führbar und hintergreifbar ist.

Zum Befestigen des Gewindeteils mit Kopfteil wird von der Außenseite her eine Befestigungsmutter auf ein an dem Gewindeteil vorhandenes Außengewinde aufgeschraubt und mit der Durchgangswandung verspannt.

### DARSTELLUNG DER ERFINDUNG

Ausgehend von dem genannten Stand der Technik liegt der vorliegenden Erfindung das technische Problem beziehungsweise die Aufgabe zugrunde eine Befestigungsvorrichtung der eingangs genannten Art anzugeben, die schnell und einfach montiert oder demontiert werden kann, die wirtschaftlich hergestellt werden kann und die hohen Beanspruchungen zuverlässig stand hält.

Die erfindungsgemäße Befestigungsvorrichtung ist durch die Merkmale des unabhängigen Anspruchs 1 gegeben. Vorteilhafte Ausgestaltungen und Weiterbildungen sind Gegenstand der von dem unabhängigen Anspruch 1 direkt oder indirekt abhängigen Ansprüche.

Die erfindungsgemäße Befestigungsvorrichtung ist demgemäß dadurch gekennzeichnet, dass an der Grundkörpereinheit stirnseitig eine Vorsprungeinheit vorhanden ist, die bei der an die Wandung angesetzten Grundkörpereinheit in die Durchgangsausnehmung ragt, jedoch nicht hinausragt, und an der Innenwandung der Durchgangsausnehmung anliegt.

Mit der erfindungsgemäßen Befestigung ist eine äußerst einfache Montage möglich. Zunächst ist die Befestigungsmutter nur wenig in das Innengewinde der Grundkörpereinheit eingeschraubt. Durch Neigung der Vorrichtung kann der Kopfbereich durch die Durchgangsausnehmung eingefädelt werden, so dass er hintergreifend an der Innenwandung vorhanden ist. Anschließend wird in einfacher Art und Weise durch Einführen eines Drehwerkzeugs, dessen Gegenformkontur mit der Formschlusskontur der Befestigungsmutter in Eingriff bringbar ist, durch Drehen der Befestigungsmutter die Grundkörpereinheit mit der Befestigungsmutter an der Wandung verspannt. Daran anschließend wird das Drehwerkzeug wieder abgezogen.

Eine bevorzugte Ausgestaltung zeichnet sich dadurch aus, dass die Vorsprungeinheit einen geneigt sich nach innen verjüngenden Querschnittskonturbereich aufweist, der erwünschte Führungseigenschaften beim Ansetzen der Grundkörpereinheit umsetzt.

Eine besonders vorteilhafte Ausgestaltung, die den Montagevorgang ebenfalls vereinfacht, zeichnet sich dadurch aus, dass der Anschlag auf seiner der Außenseite zugewandten Stirnseite eine erhöhte Rauhigkeit, insbesondere eine Riffelung, aufweist. Dadurch ist beim Ansetzen der Grundkörpereinheit mit leichtem Anpressdruck dieselbe gegen Verdrehung bei der Montage gesichert.

Eine konstruktiv besonders einfache und hinsichtlich der erforderlichen Dichtheit besonders vorteilhafte Ausgestaltung zeichnet sich dadurch aus, dass der Anschlag und die Vorsprungeinheit eine umlaufende Nut bilden, in der ein erstes Dichtmittel angeordnet ist. Das erste Dichtmittel ist bevorzugt beispielsweise als O-Ring ausgebildet.

Um die Dichtheit des gesamten Anschlusses in einfacher Art und Weise zu gewährleisten, zeichnet sich eine vorteilhafte Ausgestaltung dadurch aus, dass die Grundkörpereinheit in dem der Anschlussseite an die Durchgangsausnehmung gegenüberliegenden Endbereich ein Außengewinde aufweist, auf dem eine Hutmutter mit Durchgangsausnehmung aufgeschraubt ist, die drückend auf innerhalb der Grundkörpereinheit angeordnete zweite Dichtmittel einwirkt.

Eine vorteilhafte Ausgestaltung, die ein Aufbringen hoher Spannkräfte bei der Montage problemlos ermöglicht, zeichnet sich dadurch aus, dass die Formschlusskontur der Befestigungsmutter durch in Umfangsrichtung beabstandet angeordnete, parallel zur durchgehenden Ausnehmung verlaufende Rippen gebildet wird.

Die Steigung des Innengewindes der Grundkörpereinheit liegt bevorzugt bei ca. 0,5 mm. Durch die Verwendung eines Feingewindes werden zum Herstellen der Befestigung nur relativ geringe Kräfte benötigt, um eine zuverlässige Verspannung manuell oder motorisch zu erzeugen.

Eine besonders vorteilhafte Ausgestaltung, die eine schadlose Aufnahme von besonders hohen Beanspruchungen gewährleistet, zeichnet sich dadurch aus, dass der Kopfbereich der Befestigungsmutter drei erste überstehende Bereiche und drei zweite reduzierte Bereiche aufweist, die in Umfangsrichtung um 120 ° versetzt angeordnet sind.

Gemäß einer weiteren vorteilhaften Weiterbildung, die eine Aufbringung hoher Spannkräfte bei der Montage erlaubt, weist die Grundkörpereinheit eine Formschlussumfangskontur zum formschlüssigen Ansatz eines Drehwerkzeuges auf, wobei dieses Drehwerkzeug insbesondere dazu eingesetzt wird, um eine Drehung der Grundkörpereinheit zu verhindern, während die Befestigungsmutter mittels des weiteren Drehwerkzeugs gedreht wird.

Weitere Ausführungsformen und Vorteile der Erfindung ergeben sich durch die in den Ansprüchen ferner aufgeführten Merkmale. Die Merkmale der Ansprüche können in beliebiger Weise miteinander kombiniert werden, insoweit sie sich nicht offensichtlich gegenseitig ausschließen.

### KURZE BESCHREIBUNG DER ZEICHNUNG

Die Erfindung sowie vorteilhafte Ausführungsformen und Weiterbildungen derselben werden im Folgenden anhand der in der Zeichnung dargestellten Beispiele näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Fig. 1: schematischer Längsschnitt durch eine Befestigungsvorrichtung mit einer Grundkörpereinheit und einer hintergreifenden Befestigungsmutter bei an der Durchgangsausnehmung einer Wandung angesetzter Grundkörpereinheit im gelöstem Zustand,
- Fig. 2: schematischer Längsschnitt durch die Befestigungsvorrichtung gemäß Fig. 1 im befestigten Zustand,
- Fig. 3: schematischer Längsschnitt durch die Befestigungsvorrichtung gemäß Fig. 1 mit eingeführtem Drehwerkzeug für die Befestigungsmutter,
- Fig. 4: schematischer Querschnitt durch die Befestigungsvorrichtung gemäß Fig. 2 mit eingeführtem Drehwerkzeug für die Befestigungsmutter,
- Fig. 5: schematische Perspektivansicht des Einführvorgangs der Befestigungsmutter durch Neigung der Befestigungsvorrichtung von der Außenseite her gesehen,
- Fig. 6: schematische Perspektivansicht des Einführvorgangs der Befestigungsmutter durch Neigung der Befestigungsvorrichtung von der Innenseite her gesehen,
- Fig. 7: schematische Perspektivdarstellung der an der Wandung befestigten Befestigungsvorrichtung mit noch eingeführtem Drehwerkzeug für die Befestigungsmutter,
- Fig. 8: schematische Stirnansicht einer ersten Ausführungsform der Kopfeinheit der Befestigungsmutter mit zwei um 180 ° versetzt gegenüberliegend angeordneten ersten und zweiten Bereichen und
- Fig. 9: schematische Stirnansicht einer zweiten Ausführungsform der Kopfeinheit der Befestigungsmutter mit drei um 120 ° versetzt gegenüberliegend angeordneten ersten und zweiten Bereichen.

### WEGE ZUM AUSFÜHREN DER ERFINDUNG

In den Figuren ist ein Ausführungsbeispiel einer Befestigungsvorrichtung 10 dargestellt, das an einer Durchgangsausnehmung 12 einer Wandung 14 mit Außenseite 20 und Innenseite 22 befestigt wird. Die Wandung 14 ist beispielsweise die Wandung eines Schaltschrankes für elektrische Anschlüsse und die Befestigungsvorrichtung 10 dient dazu sichere Kabelanschlüsse an dem Schaltschrank zu gewährleisten.

Die Befestigungsvorrichtung 10 weist eine Grundkörpereinheit 24 mit einer durchgehenden Ausnehmung 26 auf. In dem der Wandung 14 zugewandten Innenbereich der Ausnehmung 26 ist ein Innengewinde 30 in der Grundkörpereinheit 24 eingeformt, das im Ausführungsbeispiel eine Steigung von 0,5 mm aufweist.

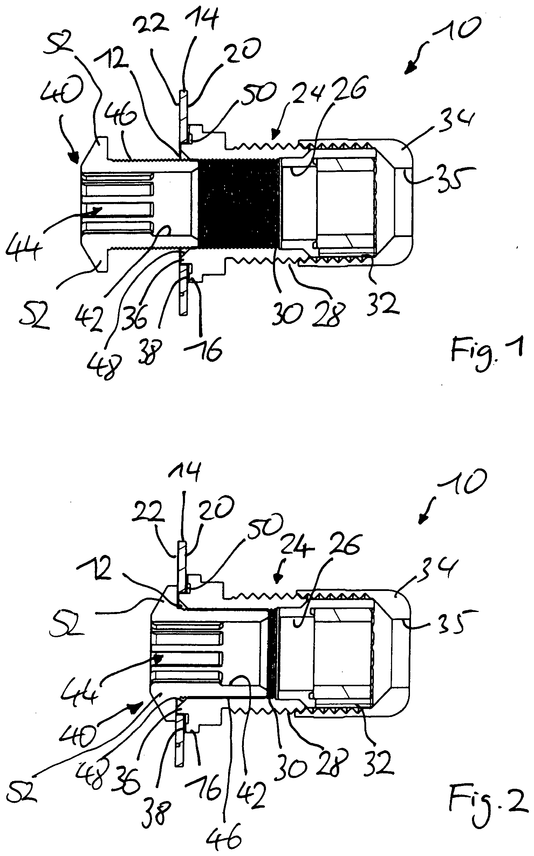

Im in Fig. 1 rechten Bereich des Außenumfangs der Grundkörpereinheit 24 ist ein Außengewinde 28 vorhanden, auf das eine Hutmutter 34 mit Durchgangsausnehmung 35 aufgeschraubt ist. Die Hutmutter 34 wirkt zu Dichtzwecken pressend auf innerhalb der Ausnehmung 26 der Grundkörpereinheit 24 angeordnete zweite Dichtmittel 32 ein.

Auf der der Durchgangsausnehmung 12 zugewandten Seite der Grundkörpereinheit 24 ist von innen nach außen zunächst eine Vorsprungeinheit 36 und beabstandet dazu ein Anschlag 16 vorhanden. Der Zwischenraum zwischen Vorsprungeinheit 36 und Anschlag 16 ist als Nut ausgebildet, in der erste Dichtmittel 50 angeordnet sind und die im Ausführungsbeispiel als O-Ring ausgebildet sind und die im montierten Zustand dichtend an der Außenseite 20 der Wandung 14 anliegen.

An der Stirnseite des Anschlags 16 ist eine Riffelung 38 vorhanden. Der Querschnitt der Vorsprungeinheit 36 weist innenseitig bereichsweise einen geneigten Querschnittskonturbereich 48 auf, wobei in diesem Bereich die Querschnittsdicke der Vorsprungeinheit 36 von außen nach innen abnimmt. Dadurch sind Führungseigenschaften beim Ansetzen der Befestigungsmutter 40 gegeben.

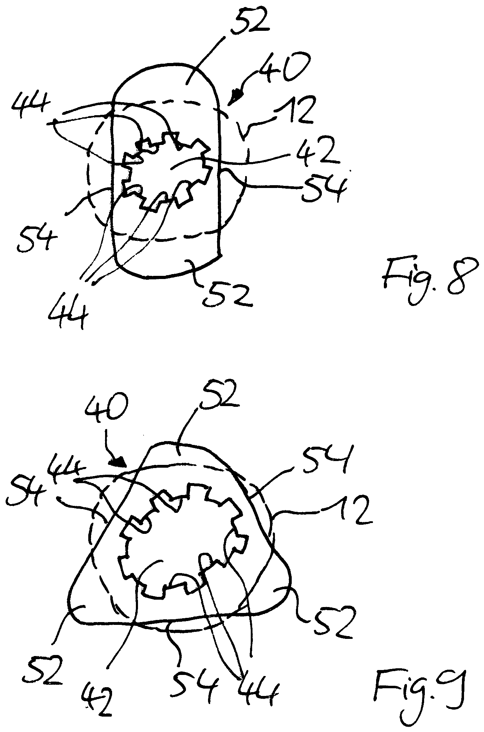

In das Innengewinde 30 der Grundkörpereinheit 24 ist die Befestigungsmutter 40 eingeschraubt. Die Befestigungsmutter 40 besitzt eine durchgehende Ausnehmung 42 mit einem Schaftbereich und einem Kopfbereich, wobei im Schaftbereich ein Außengewinde 46 vorhanden ist, das in dem Innengewinde 30 der Grundkörpereinheit 24 kämmt und der Kopfbereich umlaufend abwechselnd erste Bereiche 52 und zweite Bereiche 54 aufweist, wobei die ersten Bereiche 52 querschnittsmäßig überstehend und die zweiten Bereiche 54 querschnittsmäßig reduziert vorhanden sind (siehe auch Fig. 8 und 9).

In Fig. 8 ist ein erstes Ausführungsbeispiel der Ausbildung der Kopfeinheit der Befestigungsmutter 40 in einer Stirnansicht dargestellt. Die Kopfeinheit weist zwei gegenüberliegende erste Bereiche 52 auf, deren Außenrandkonturabstand untereinander größer ist als der Durchmesser der Durchgangsausnehmung 12. Zwischen den beiden ersten Bereichen sind gegenüberliegend zwei zweite Bereiche 54 angeordnet, deren dichter Außenrandkonturabstand kleiner ist als der Durchmesser der Durchgangsausnehmung 12. Die Durchgangsausnehmung 12 ist in den Figuren 8 und 9 gestrichelt dargestellt.

Das zweite Ausführungsbeispiel einer Kopfeinheitausbildung der Befestigungsmutter 40 ist in Fig. 9 dargestellt. Es unterscheidet sich von der Ausbildung gemäß Fig. 8 im Wesentlichen dadurch, dass insgesamt drei erste Bereiche 52 vorhanden sind, die umlaufend um 120 ° versetzt angeordnet sind und entsprechend dazwischen drei zweite Bereiche 54 vorhanden sind. Die Querschnittabmessungen der Kopfbereiche sind dabei so bemessen, dass die Befestigungsvorrichtung 10 beziehungsweise die Befestigungsmutter 40 mit ihrem Kopfbereich durch Neigung in die Durchgangsausnehmung 12 eingefädelt werden können und durch anschließendes Gegenneigen in eine Hintergreifungsposition verbracht werden kann.

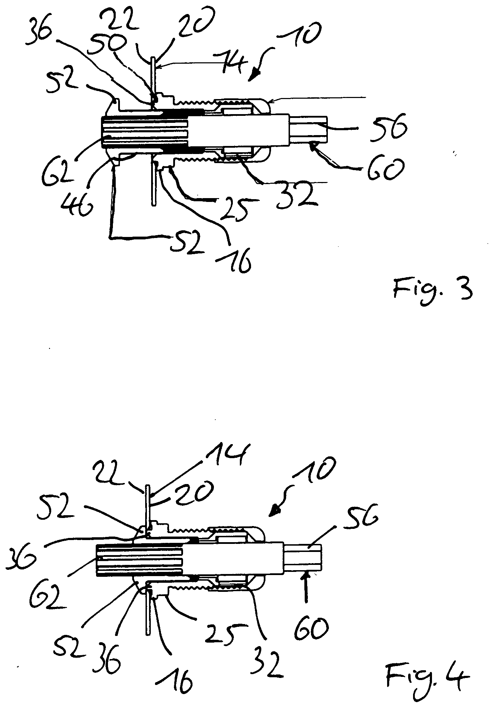

Die Befestigungsmutter 40 besitzt in ihrem nach vorne weisenden Bereich der durchgehenden Ausnehmung 52 innenseitig eine Formschlusskontur 44 in die ein Drehwerkzeug mit entsprechender Gegenformschlusskontur eingeführt werden kann und zwar von der Seite der Grundkörpereinheit 24 her durch deren durchgehende Ausnehmung 26 (siehe Fig. 3, 4 und 7). Die Formschlusskontur 44 wird im Ausführungsbeispiel durch in Umfangsrichtung rastermäßig beabstandet parallel verlaufende Längsrippen gebildet.

Sowohl die Vorsprungeinheit 36 als auch der Anschlag 16 sind umlaufend vorhanden. An den Anschlag 16 und zwar in Fig. 1 rechts von dem Anschlag 16, schließt an der Grundkörpereinheit 24 eine Formschlussumfangskontur 25 außenkonturmäßig an, die den Ansatz eines Werkzeuges gestattet.

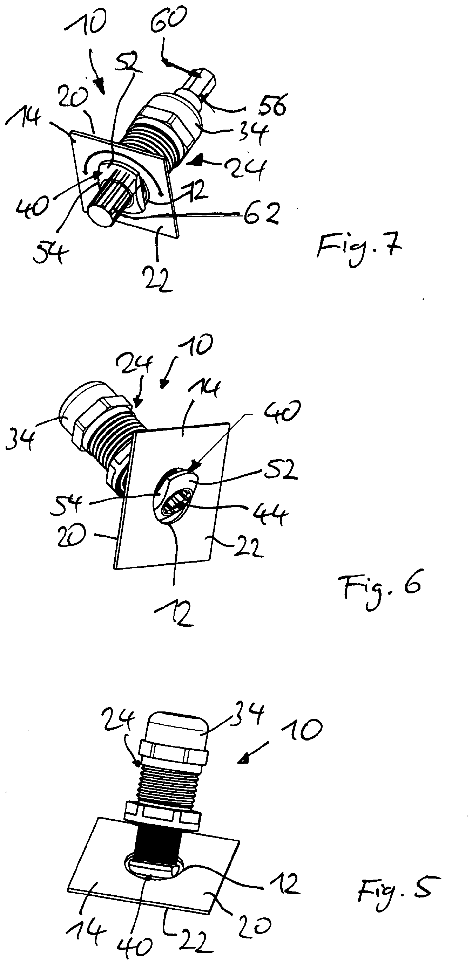

Bei der Montage der Befestigungsvorrichtung 10 an der Wandung 14 wird nun wie folgt vorgegangen. Die Befestigungsmutter 40 ist leicht in die Grundkörpereinheit 24 eingeschraubt. Dann wird die Befestigungsvorrichtung 10 gegenüber der Wandung 14 geneigt, wie in den Figuren 5 und 6 dargestellt, und der Kopfbereich der Befestigungsmutter 40 wird durch die Durchgangsausnehmung 12 hindurch geführt. Daran anschließend wird die Befestigungsvorrichtung 10 wieder rechtwinklig zur Wandung 14 ausgerichtet und die Grundkörpereinheit 24 mit ihrer Vorsprungeinheit 36 in die Durchgangsausnehmung 12 eingeführt. Der Außendurchmesser der Vorsprungeinheit 36 ist dabei geringfügig kleiner als der Innendurchmesser der Durchgangsausnehmung 12. Die Länge der Vorsprungeinheit 36 ist so bemessen, dass sie im angesetzten Zustand der Grundkörpereinheit 24 nicht über die Innenseite 22 der Wandung 14 hinaus ragt. Durch den Eingriff der Vorsprungeinheit 36 in die Durchgangsausnehmung 12 ist die Befestigungsvorrichtung 10 gegen Verschiebung in der Wandebene arretiert. Gleichzeitig schlägt im eingesetzten Zustand die stirnseitige Riffelung 38 des Anschlags 16 an der Außenseite 20 der Wandung 14 an, welches eine Begrenzung der Verschiebung der Befestigungsvorrichtung 10 in Längsrichtung darstellt. Durch Andrücken der Grundkörpereinheit 24 an die Wandung 14 wird infolge der Riffelung 38 eine gewisse Sicherung gegen Verdrehung infolge Reibschluss gewährleistet. Nunmehr kann das Drehwerkzeug 60 von hinten her durch die durchgehende Ausnehmung 36 der Grundkörpereinheit 24 und die durchgehende Ausnehmung 42 der Befestigungsmutter 40 eingeschoben werden, bis deren Gegenformschlusskontur 62 mit der Formschlusskontur 44 der Befestigungsmutter 40 in Eingriff kommt.

Nachdem das Drehwerkzeug 60 eingeführt ist, wird durch Drehen desselben die Befestigungsmutter 40 in das Innere der Grundkörpereinheit 24 eingedreht, bis sich die überstehenden Bereiche 52 an der Innenwandung 22 der Wand 14 verspannen. Ist das erforderliche Anziehmoment erreicht, wird das Drehwerkzeug 60 wieder herausgezogen und der Befestigungsanschluss ist fertig gestellt.

Das in den Figuren 3, 4 und 7 dargestellte Drehwerkzeug 60 weist in seinem über die Grundkörpereinheit 36 nach außen überstehenden Endbereich eine Mitnehmereinheit 56 auf, die geeignet ist, an einer Werkzeugaufnahme eines Drehantriebsaggregats, beispielsweise Akku-Schraubers, angeschlossen zu werden.

Die Befestigungsvorrichtung 10 kann alternativ auch bereits vor dem Ansetzen mit dem Drehwerkzeug 60 bestückt sein.

## Patentansprüche

1. Befestigungsvorrichtung (10) für Bauteile, insbesondere Kabelanschlüsse oder dergleichen, in einer Durchgangsausnehmung (12) einer Wandung (14), insbesondere eines Schaltschranks, mit einer Außenseite (20) und einer Innenseite (22) mit
- einer Grundkörpereinheit (24) mit einer durchgehenden Ausnehmung (26), wobei die Grundkörpereinheit (24) bis zu einem stirnseitigen Anschlag (16) an der Außenseite (20) der Wandung (14) anlegbar ist, und
- einer innenseitig anordenbaren mit der Grundkörpereinheit (24) verbindbaren Befestigungseinheit, mittels deren die Befestigungsvorrichtung (10) an der Wandung (14) befestigbar ist,
- die Befestigungseinheit als Befestigungsmutter (40) ausgebildet ist und
- die Befestigungseinheit
- - eine durchgehende Ausnehmung (42) aufweist,
- - einen Kopfbereich aufweist,
- - einen Schaftbereich mit Gewinde, das in das Gewinde der Grundkörpereinheit schraubbar ist, aufweist,
- - eine Formschlusskontur (44), die an der Innenwandung der durchgehenden Ausnehmung (42) zumindest bereichsweise vorhanden ist und an der eine Gegenformschlusskontur (62) eines durch die Ausnehmung (26) der Grundkörpereinheit (24) einführbares Drehwerkzeug (60) anschließbar ist, aufweist, wobei
- der Kopfbereich zumindest zwei erste Bereiche (52) und zwischen den ersten Bereichen (52) angeordnete zweite Bereiche (54) aufweist, wobei der Abstand der äußeren Randkonturen der ersten Bereiche (52) größer ist als die Querschnittsabmessung der Durchgangsausnehmung (12) und der Abstand der äußeren Randkonturen der zweiten Bereiche (54) kleiner ist als die Querschnittsabmessung der Durchgangsausnehmung (12), so dass der Kopfbereich der Befestigungsmutter (40) durch Neigung derselben in die Durchgangsausnehmung (12) einfädelbar, hindurch führbar und hintergreifbar ist,
- das Gewinde des Schaftbereiches als Außengewinde (46) ausgebildet ist und das Gewinde der Grundkörpereinheit als Innengewinde (30) ausgebildet ist,
- **dadurch gekennzeichnet, dass**
- an der Grundkörpereinheit (24) stirnseitig eine Vorsprungeinheit (36) vorhanden ist, die bei der an die Wandung (40) angesetzten Grundkörpereinheit (24) in die Durchgangsausnehmung (12) ragt, jedoch nicht hinausragt, und an der Innenwandung der Durchgangsausnehmung (12) anliegt.

2. Befestigungsvorrichtung nach Anspruch 1,
- **dadurch gekennzeichnet, dass**
- die Vorsprungeinheit (36) einen geneigt sich nach innen verjüngenden Querschnittskonturbereich (48) aufweist.

3. Befestigungsvorrichtung nach Anspruch 1 oder 2,
- **dadurch gekennzeichnet, dass**
- der Anschlag (16) auf seiner der Außenseite (20) zugewandten Stirnseite eine erhöhte Rauhigkeit, insbesondere eine Riffelung (38), aufweist.

4. Befestigungsvorrichtung nach einem oder mehreren der vorstehenden Ansprüche,
- **dadurch gekennzeichnet, dass**
- der Anschlag (16) und die Vorsprungeinheit (36) eine umlaufende Nut bilden, in der ein erstes Dichtmittel (50) angeordnet ist.

5. Befestigungsvorrichtung nach Anspruch 4,
- **dadurch gekennzeichnet, dass**
- das erste Dichtmittel (50) als O-Ring ausgebildet ist.

6. Befestigungsvorrichtung nach einem oder mehreren der vorstehenden Ansprüche,
- **dadurch gekennzeichnet, dass**
- die Grundkörpereinheit (24) in dem der Anschlussseite an die Durchgangsausnehmung (12) gegenüberliegenden Endbereich ein Außengewinde (28) aufweist, auf dem eine Hutmutter (34) mit Durchgangsausnehmung (35) aufgeschraubt ist, die drückend auf innerhalb der Grundkörpereinheit (24) angeordnete zweite Dichtmittel (32) einwirkt.

7. Befestigungsvorrichtung nach einem oder mehreren der vorstehenden Ansprüche,
- **dadurch gekennzeichnet, dass**
- die Formschlusskontur (44) der Befestigungsmutter (40) durch in Umfangsrichtung beabstandet angeordnete, parallel zur durchgehenden Ausnehmung (42) verlaufende Rippen gebildet wird.

8. Befestigungsvorrichtung nach einem oder mehreren der vorstehenden Ansprüche,
- **dadurch gekennzeichnet, dass**
- die Steigung des Innengewindes (30) der Grundkörpereinheit (24) circa 0,5 mm beträgt.

9. Befestigungsvorrichtung nach einem oder mehreren der vorstehenden Ansprüche,
- **dadurch gekennzeichnet, dass**
- der Kopfbereich der Befestigungsmutter (40) drei erste überstehende Bereiche (52) und drei zweite reduzierte Bereiche (54) aufweist, die in Umfangsrichtung um 120 ° versetzt angeordnet sind.

10. Befestigungsvorrichtung nach einem oder mehreren der vorstehenden Ansprüche,
- **dadurch gekennzeichnet, dass**
- die Grundkörpereinheit (24) eine Formschlussumfangskontur (25) zum formschlüssigen Ansatz eines Drehwerkzeuges aufweist.

## Claims

1. Fastening apparatus (10) for components, in particular cable connections or the like, in a passage recess (12) in a wall (14), in particular a switchgear cabinet, having an outer face (20) and an inner face (22), comprising
- a main body unit (24) with a continuous recess (26), wherein the main body unit (24), as far as an end-side stop (16), can be placed against the outer face (20) of the wall (14), and
- a fastening unit which can be arranged on the inner face, can be connected to the main body unit (24) and by means of which the fastening apparatus (10) can be fastened to the wall (14),
- the fastening unit is in the form of a fastening nut (40), and
- the fastening unit
-- has a continuous recess (42),
-- has a head region,
-- has a shaft region with a thread which can be screwed into the thread of the main body unit,
-- has an interlocking contour (44) which is present at least in regions on the inner wall of the continuous recess (42) and to which a mating interlocking contour (62) of a turning tool (60), which can be inserted through the recess (26) in the main body unit (24), can be connected, wherein
- the head region has at least two first regions (52) and second regions (54) which are arranged between the first regions (52), wherein the distance between the outer edge contours of the first regions (52) is greater than the cross-sectional dimension of the passage recess (12), and the distance between the outer edge contours of the second regions (54) is less than the cross-sectional dimension of the passage recess (12), so that the head region of the fastening nut (40) can be threaded into, passed through and engage behind the passage recess (12) by tilting the said fastening nut,
- the thread of the shaft region is in the form of an external thread (46) and the thread of the main body unit is in the form of an internal thread (30),
- **characterized in that**
- there is a projection unit (36) on the end side of the main body unit (24), the said projection unit, when the main body unit (12) is fitted to the wall (40), protruding into the passage recess (12), but not protruding out of the said passage recess, and bearing against the inner wall of the passage recess (12).

2. Fastening apparatus according to Claim 1,
- **characterized in that**
- the projection unit (36) has a cross-sectional contour region (48) which tapers in an inclined manner towards the inside.

3. Fastening apparatus according to Claim 1 or 2,
- **characterized in that**
- the stop (16), on its end side which faces the outer face (20), has an increased roughness, in particular a fluting (38).

4. Fastening apparatus according to one or more of the preceding claims,
- **characterized in that**
- the stop (16) and the projection unit (36) form a circumferential groove in which a first sealing means (50) is arranged.

5. Fastening apparatus according to Claim 4,
- **characterized in that**
- the first sealing means (50) is in the form of an O-ring.

6. Fastening apparatus according to one or more of the preceding claims,
- **characterized in that**
- the main body unit (24), in the end region which is situated opposite the connection side to the passage recess (12), has an external thread (28) on which a cap nut (34) with a passage recess (35) is screwed, the said cap nut acting with a pressing action on second sealing means (32) which are arranged within the main body unit (24).

7. Fastening apparatus according to one or more of the preceding claims,
- **characterized in that**
- the interlocking contour (44) of the fastening nut (40) is formed by ribs which are arranged at a distance in the circumferential direction and run parallel to the continuous recess (42).

8. Fastening apparatus according to one or more of the preceding claims,
- **characterized in that**
- the pitch of the internal thread (30) of the main body unit (24) is approximately 0.5 mm.

9. Fastening apparatus according to one or more of the preceding claims,
- **characterized in that**
- the head region of the fastening nut (40) has three first protruding regions (52) and three second reduced regions (54) which are arranged offset through 120° in the circumferential direction.

10. Fastening apparatus according to one or more of the preceding claims,
- **characterized in that**
- the main body unit (24) has an interlocking circumferential contour (25) for fitting a turning tool in an interlocking manner.

## Revendications

1. Dispositif de fixation (10) pour composants, en particulier raccords de câble ou similaire, dans un orifice de passage (12) d'une paroi (14), en particulier d'une armoire électrique, comprenant un côté extérieur (20) et un côté intérieur (22) comprenant
- une unité de corps de base (24) avec un orifice de passage (26), l'unité de corps de base (24) pouvant être appliquée jusqu'à une butée frontale (16) contre le côté extérieur (20) de la paroi (14), et
- une unité de fixation pouvant être disposée du côté intérieur et pouvant être connectée à l'unité de corps de base (24), au moyen de laquelle le dispositif de fixation (10) peut être fixé à la paroi (14),
- l'unité de fixation étant réalisée sous forme d'écrou de fixation (40) et
- l'unité de fixation présentant
- un orifice de passage (42),
- une région de tête,
- une région de tige avec un filetage qui peut être vissé dans le filetage de l'unité de corps de base,
- un contour à engagement par correspondance de formes (44) qui est prévu au moins en partie au niveau de la paroi intérieure de l'orifice de passage (42) et auquel peut être raccordé un contour à engagement par correspondance de formes conjugué (62) d'un outil rotatif (60) pouvant être introduit à travers l'orifice (26) de l'unité de corps de base (24),
- la région de tête présentant au moins deux premières régions (52) et des deuxièmes régions (54) disposées entre les premières régions (52), la distance des contours de bord extérieurs des premières régions (52) étant supérieure à la dimension en section transversale de l'orifice de passage (12) et la distance des contours de bord extérieur des deuxièmes régions (54) étant inférieure à la dimension en section transversale de l'orifice de passage (12), de telle sorte que la région de tête de l'écrou de fixation (40), par inclinaison de ce dernier, puisse être enfilée, guidée et saisie par l'arrière dans l'orifice de passage (12),
- le filetage de la région de tige étant réalisé sous forme de filetage extérieur (46) et le filetage de l'unité de corps de base étant réalisé sous forme de filetage intérieur (30),
- **caractérisé en ce qu'**
- une unité formant saillie (36) est prévue au niveau de l'unité de corps de base (24) du côté frontal, laquelle pénètre dans l'orifice de passage (12) lorsque l'unité de corps de base (24) est appliquée contre la paroi (40), mais ne fait pas saillie au-delà de celui-ci, et s'applique contre la paroi intérieure de l'orifice de passage (12).

2. Dispositif de fixation selon la revendication 1,
- **caractérisé en ce que**
- l'unité formant saillie (36) présente une région de contour en section transversale se rétrécissant vers l'intérieur (48) de manière inclinée.

3. Dispositif de fixation selon la revendication 1 ou 2,
- **caractérisé en ce que**
- la butée (16) présente sur son côté frontal tourné vers le côté extérieur (20) une rugosité accrue, en particulier une cannelure (38).

4. Dispositif de fixation selon l'une quelconque ou plusieurs des revendications précédentes,
- **caractérisé en ce que**
- la butée (16) et l'unité formant saillie (36) forment une rainure périphérique dans laquelle est disposé un premier moyen d'étanchéité (50).

5. Dispositif de fixation selon la revendication 4,
- **caractérisé en ce que**
- le premier moyen d'étanchéité (50) est réalisé sous forme de joint torique.

6. Dispositif de fixation selon l'une quelconque ou plusieurs des revendications précédentes,
- **caractérisé en ce que**
- l'unité de corps de base (24) présente, dans la région d'extrémité opposée au côté de raccordement à l'orifice de passage (12), un filetage extérieur (28) sur lequel est vissé un écrou borgne (34) avec un orifice de passage (35), qui agit en pressant sur un deuxième moyen d'étanchéité (32) disposé à l'intérieur de l'unité de corps de base (24).

7. Dispositif de fixation selon l'une quelconque ou plusieurs des revendications précédentes,
- **caractérisé en ce que**
- le contour à engagement par correspondance de formes (44) de l'écrou de fixation (40) est formé par des nervures disposées de manière espacée dans la direction périphérique, s'étendant parallèlement à l'orifice de passage (42).

8. Dispositif de fixation selon l'une quelconque ou plusieurs des revendications précédentes,
- **caractérisé en ce que**
- le pas de filetage intérieur (30) de l'unité de corps de base (24) vaut environ 0,5 mm.

9. Dispositif de fixation selon l'une quelconque ou plusieurs des revendications précédentes,
- **caractérisé en ce que**
- la région de tête de l'écrou de fixation (40) présentes trois premières régions saillantes (52) et trois deuxièmes régions réduites (54), qui sont disposées de manière décalée de 120° dans la direction périphérique.

10. Dispositif de fixation selon l'une quelconque ou plusieurs des revendications précédentes, **caractérisé en ce que**
- l'unité de corps de base (24) présente un contour périphérique à engagement par correspondance de formes (25) pour l'application par engagement par correspondance de formes d'un outil rotatif.
